# EUROPEAN PATENT SPECIFICATION

(11) **EP 3 048 888 B1**
(45) Date of publication and mention of the grant of the patent: **06.06.2018**
(21) Application number: 14772140.1
(22) Date of filing: 23.09.2014
(51) Int. Cl.: A01N 43/40, A01N 37/42, A01P 21/00, A01N 47/24

(54) **PESTICIDAL MIXTURES**
PESTIZIDGEMISCHE
MÉLANGES DE PESTICIDES

(30) Priority: 25.09.2013 EP 13185899
(43) Date of publication of application: 03.08.2016
(73) Proprietor: BASF SE, 67056 Ludwigshafen am Rhein (DE)
(72) Inventor: NIENDORF, Johann-Christian, 67061 Ludwigshafen (DE); VALTIN STREY, Maria, 02977 Hoyerswerda (DE); BUCKENAUER, Anke, 67061 Ludwigshafen (DE); SARNATSKY, Andrej, 68161 Mannheim (DE)
(74) Representative: BASF IP Association
(86) International application number: PCT/EP2014/070276
(87) International publication number: WO 2015/044149

(56) References cited:
- EP-A2- 0 344 533
- WO-A1-2007/001919
- WO-A2-2009/098188
- Anonymously: "Pesticidal mixtures An IP.com Prior Art Database Technical Disclosure", IP.com IPCOM 000222476D, 10 October 2012 (2012-10-10), XP055104744, Retrieved from the Internet: URL:http://ip.com/pdf/ipcompad/IPCOM000222 476D.pdf [retrieved on 2014-02-27]

## Description

WO2007/001919 discloses mixtures of strobilurine fungicides and plant growth regulators which may or may not comprise more than one fungicide or more than one plant growth regulator.

WO2009/098188 discloses compositions comprising pyraclostrobin and chlormequat chloride as well as seeds and seed coatings comprising pyraclostrobin and plant growth regulators.

Anonymous disclosure: "Pesticidal mixtures An IP.com Prior Art Database Technical Disclosure", IP.com IPCOM 000222476D, 10 October 2012 (2012-10-10), XP055104744 discloses binary and ternary mixtures comprising one or two fungicides and a plant growth regulator.

EPO344533 discloses mixtures of plant growth regulators, including mixtures of prohexadione and mepiquate.

The present invention relates to mixtures comprising, as active compounds
1) a compound (I) being pyraclostrobin; and
2) a compound (II), selected from prohexadione and salts and esters thereof; and
3) a compound (III), selected from mepiquate and salts thereof in synergistically effective amounts.

Within the scope of the invention, the health of a plant is increased. The term "in effective amounts" denotes an amount of the inventive mixtures, which is sufficient for achieving the plant health effects, in particular the yield effect and restistance against abiotic stress as defined herein below. More exemplary information about amounts, ways of application and suitable ratios to be used is given below. Anyway, the skilled artisan is well aware of the fact that such an amount can vary in a broad range and is dependent on various factors, e.g. the treated plant or material and the climatic conditions.

Herein, the purely additive effect (in mathematical terms) of the application of the individual compounds is surpassed by the application of the inventive mixture. The increase of the health of a plant is more than surprising, since it can be assumed that fungicidal compounds and plant growth regulators have completely different mode of actions.
Thus, we have found that simultaneous, that is joint or separate, application of the compound I, compound II and compound III or successive application of the compound I, compound II and compound III provides enhanced plant health effects compared to the plant health effects that are possible with the individual compounds (synergistic mixtures wherein the synergism is plant health synergism).

Thus, the present invention also relates to a method for increasing the health of a plant, in particular the yield of a plant or the resistance of a plant towards abiotic stress, wherein the plant, the locus where the plant is growing or is expected to grow or plant propagation material from which the plant grows is treated with a synergistically effective amount of a mixture as defined above.

The compounds I, II and III as well as their action and methods for producing them are generally known. For instance, the commercially available compounds can be found in "The Pesticide Manual, 15th Edition, British Crop Protection Council (2009)" among other publications.
The term "prohexadione and salts thereof" include prohexadione and those salts of prohexadione, where the counterion is an agriculturally acceptable cation. Preferably, the term prohexadione and salts thereof refers to prohexadione calcium.
The term "mepiquat and salts thereof" include mepiquat, mepiquat-chlorid, mepiquat pendaborate or further salts of mepiquat, where the counterion is an agriculturally acceptable cation, for example mepiquat chloride or mepiquat pentaborate .
Preferably, the term mepiquat and salts thereof refers to mepiquat chloride.

In crop protection, there is a continuous need for compositions that improve the health of plants. Healthier plants are desirable since they result among others in better yields and/or a better quality of the plants or crops. Healthier plants also better resist to biotic and/or abiotic stress.

It was therefore an object of the present invention to provide a pesticidal composition which should improve the health of plants.

We have found that these objects are in part or in whole achieved by using the mixtures as defined in the outset.

The mass ratio of any two ingredients in each combination is selected as to give the desired action. Generally, the ratio by weight between any two ingredients in any combination of the present invention (ratios between any of the compounds I, II and III) independently of one another, is from 1000:1 to 1:1000, preferably from 500:1 to 1:500, more preferably the ratios from 100:1 to 1:100 (for example ratios from 99:1, 98:2, 97:3, 96:4, 95:5, 94:6, 93:7, 92:8, 91:9, 90:10, 89:11, 88:12, 87:13, 86:14, 85:15, 84:16, 83:17, 82:18, 81:19, 80:20, 79:21, 78:22, 77:23, 76:24, 75:25, 74:26, 73:27, 72:28, 71:29, 70:30, 69:31, 68:32, 67:33, 66:34, 65:45, 64:46, 63:47, 62:48, 61:49, 60:40, 59:41, 58:42, 57:43, 56:44, 55:45, 54:46, 53:47, 52:48, 51:49, 50:50, 49:51, 48:52, 47:53, 46:54, 45:55, 44:56, 43:57, 42:58, 41:59, 40:60, 39:61, 38:62, 37:63, 36:64, 35:65, 34:66, 33:67, 32:68, 31:69, 30:70, 29:71, 28:72, 27:73, 26:74, 25:75, 24:76, 23:77, 22:78, 21:79, 20:80, 19:81, 18:82, 17:83, 16:84, 15:85, 14:86, 13:87, 12:88, 11:89, 10:90, 9:91, 8:92, 7:93, 6:94, 5:95, 4:96, 3:97, 2:98, to 1:99). Herein, preferred mass ratios are those between any two components of present invention are from 75:1 to 1:75, more preferably, 50:1 to 1.50, especially 25:1 to 1:25, advantageously 10:1 to 1:10, such as 5:1 to 1:5.

All embodiments of the mixtures set forth above (including the respective preferences as set forth above) are hereinbelow referred to as "inventive mixture" or "inventive mixtures".

The inventive mixtures can further contain one or more insecticides, fungicides, herbicides, biologicals and plant growth regulators.

As referred above, the present invention also relates to a method for increasing the health of plants, wherein the plant, the locus where the plant is growing or is expected to grow or plant propagation material from which the plant grows is treated with an effective amount of an inventive mixture.

Preferably, the present invention relates to a method for increasing the yield of a plant, wherein the plant, the locus where the plant is growing or is expected to grow or plant propagation material from which the plant grows is treated with an effective amount of an inventive mixture.

Preferably, the present invention relates to a method for increasing the resistance of a plant against abiotic stress.

The compounds contained in the mixtures as defined above can be applied simultaneously, that is jointly or separately, or in succession, the sequence, in the case of separate application, generally not having any effect on the result of the control measures.

According to this invention, applying the compound I, compound II and compound III is to be understood to denote, that at least the compound I, compound II and compound III occur simultaneously at the site of action (i.e. plant, plant propagation material (preferably seed), soil, area, material or environment in which a plant is growing (or may grow) in an effective amount.

This can be obtained by applying the compound I, compound II and compound III simultaneously, either jointly (e. g. as tank-mix) or seperately, or in succession, wherein the time interval between the individual applications is selected to ensure that the active substance applied first still occurs at the site of action in a sufficient amount at the time of application of the further active substance(s). The order of application is not essential for working of the present invention.

In the inventive mixtures, the weight ratio of the compounds generally depends from the properties of the compounds of the inventive mixtures.

In a further embodiment, either individual components of the composition according to the invention or partially premixed components, e. g. components comprising the compound I, compound II and compound III, can be applied jointly (e.g. after tankmix) or consecutively.

Principally, the term "plants" "plant" denotes various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as oilseed rape, canola, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grape-fruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn (maize), soybean, oilseed rape, canola, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the vegetative material of these plants.
Preferred plants are cotton, alfalfa, sugarcane, sugarbeet, sunflower, mustard, sorghum, potato, ornamentals, corn, soybean, OSR/canola, cereals, rice, legumes/pulses, coffee, fruits (temperate and tropical), grapes and vegetables, wheat
More preferred plants are sugar beet, corn, soybean, summer oilseed rape, cereals, rice, legumes/pulses, coffee, fruits (temperate and tropical), grapes and vegetables, cotton and sunflower and winter crops, such as winter oil seed rape, nd winter cereals such as rye (winter rye/fall rye), wheat (winter wheat/fall wheat), barley (winter barley/fall barley) and triticale (winter triticale), oat (winter oat).
Most preferred plants are corn, soybean, winter oil seed rape, summer oilseed rape, cotton and sunflower and winter crops, such as winter oil seed rape and winter cereals such as rye (winter rye/fall rye), wheat (winter wheat/fall wheat), barley (winter barley/fall barley) and triticale (winter triticale), oat (winter oat), sugar beet (winter sugar beet), wherein winter oilseed rape is the most preferred crop.

The term " plants" is also to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxyl-phenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus*, particularly from *Bacillus thuringiensis*, such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pretoxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the CrylAb toxin), YieldGard® Plus (corn cultivars producing CrylAb and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the CrylAc toxin), Bollgard® II (cotton cultivars producing CrylAc and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the CrylAb toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the CrylAc toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought (MON/BASF drought guard event, see WO2009/111263, event MON87460)), salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The term "locus" is to be understood as any type of environment, soil, area or material where the plant is growing or intended to grow as well as the environmental conditions (such as temperature, water availability, radiation) that have an influence on the growth and development of the plant and/or its propagules.

In the terms of the present invention "mixture" means a combination of at least two active ingredients (compounds). In the present case, a mixture used for increasing the health of a plant comprises one compound (I) and one compound (II) and one compound (III).

The term "plant propagation material" is to be understood to denote all the generative parts of the plant such as seeds and vegetative plant material such as cuttings and tubers (e.g. potatoes), which can be used for the multiplication of the plant. This includes seeds, grains, roots, fruits, tubers, bulbs, rhizomes, cuttings, spores, offshoots, shoots, sprouts and other parts of plants, including seedlings and young plants, which are to be transplanted after germination or after emergence from soil, meristem tissues, single and multiple plant cells and any other plant tissue from which a complete plant can be obtained.

The term "propagules" or "plant propagules" is to be understood to denote any structure with the capacity to give rise to a new plant, e.g. a seed, a spore, or a part of the vegetative body capable of independent growth if detached from the parent. In a preferred embodiment, the term "propagules" or "plant propagules" denotes for seed.

The term "plant health effective amount" denotes an amount of the inventive mixtures, which is sufficient for achieving plant health effects as defined herein below. More exemplary information about amounts, ways of application and suitable ratios to be used is given below. Anyway, the skilled artisan is well aware of the fact that such an amount can vary in a broad range and is dependent on various factors, e.g. the treated cultivated plant or material and the climatic conditions.

The term "health of a plant" or "plant health" is defined as a condition of the plant and/or its products which is determined by several aspects alone or in combination with each other, in particular such as increased yield and tolerance to abiotic or biotic stress.

It has to be emphasized that the above mentioned effects of the inventive mixtures, i.e. enhanced health of the plant, are also present when the plant is not under biotic stress and in particular when the plant is not under pest pressure.

For example, for foliar applications, it is evident that a plant suffering from fungal or insecticidal attack produces a smaller biomass and leads to a reduced yield as compared to a plant which has been subjected to curative or preventive treatment against the pathogenic fungus or any other relevant pest and which can grow without the damage caused by the biotic stress factor. However, the methods according to the invention lead to an enhanced plant health even in the absence of any biotic stress. This means that the positive effects of the mixtures of the invention cannot be explained just by the pesticidal activities of the compounds (I), (II) and (III), but are based on further activity profiles. Accordingly, the application of the inventive mixtures can also be carried out in the absence of pest pressure.

For example, for seed treatment and soil applications, it is evident that a plant suffering from fungal or insecticidal attack shows reduced germination and emergence leading to poorer plant or crop establishment and vigor, and consequently, to a reduced yield as compared to a plant propagation material which has been subjected to curative or preventive treatment against the relevant pest and which can grow without the damage caused by the biotic stress factor. However, the methods according to the invention lead to an enhanced plant health even in the absence of any biotic stress. This means that the positive effects of the mixtures of the invention cannot be explained just by the pesticidal activities of the compounds (I), (II) and (III), but are based on further activity profiles. Accordingly, the application of the inventive mixtures can also be carried out in the absence of pest pressure.

According to the present invention, "increased yield" of a plant means that the harvestable yield of the respective plant is increased by a measurable amount over the harestable yield of the same plant produced under the same conditions or refers to of the plant but without the application of the inventive mixture, referring for example to the absolute yield of harvested "grains" and "fruits" and/or the ratio of "grains" and "fruits" vs above ground biomass, which is leading to an improved yield efficiency and/or and improvement in the yield architecture , i.e. more yield organs (e.g. pods/cobs/ears/panicle/head) per plant, more kernels per yield organ/row.

"Increased yield" also includes "enhanced quality". In other words, increased yield also refers to increased quality of the yield.

"Enhanced quality" means that certain plant characteristics such as the content or composition of certain ingredients are increased or improved by a measurable or noticeable amount over the same factor of the plant produced under the same conditions, but without the application of the mixtures of the present invention. Enhanced quality can be characterized, among others, by following improved properties of the plant or its product: increased nutrient content; and/or increased protein content; and/or increased oil content; and/or increased starch content; and/or increased content of fatty acids; and/or increased metabolite content; and/or increased carotenoid content; and/or increased sugar content; and/or increased amount of essential amino acids; and/or improved nutrient composition; and/or improved protein composition; and/or improved composition of fatty acids; and/or improved metabolite composition; and/or improved carotenoid composition; and/or improved sugar composition; and/or improved amino acids composition ; and/or improved or optimal fruit color; and/or improved leaf color; and/or higher storage capacity; and/or better processability of the harvested products: "Grain" and "fruit" are to be understood as any plant product which is further utilized after harvesting, e.g. fruits in the proper sense, vegetables, nuts, grains, seeds, wood (e.g. in the case of silviculture plants), flowers (e.g. in the case of gardening plants, ornamentals) etc., that is anything of economic value that is produced by the plant.

Another indicator for the condition of the plant is the plant vigor. The plant vigor becomes manifest in several aspects such as the general visual appearance.

Thus, in a further embodiment of the invention, the invention relates to methods of increasing the vigor of a plant by application of an inventive mixture by treating the plant, the locus where the plant is growing or is expected to grow or plant propagation material from which the plant grows with an efficient amount of the inventive mixture.

Improved plant vigor can be characterized, among others, by the following improved properties of the plant: improved vitality of the plant; and/or improved plant growth; and/or improved plant development; and/or improved visual appearance; and/or improved plant stand (less plant verse/Iodging-and/or bigger leaf blade; and/or bigger size; and/or increased plant height; and/or increased tiller number; and/or increased number of side shoots; and/or increased number of flowers per plant; and/or increased shoot growth; and/or enhanced photosynthetic activity (e.g. based on increased stomatal conductance and/or increased CO₂ assimilation rate; and or improved lodging behaviour (reduced shoot length in combination with thickend stem base lead to less lodging) or shortening of the aboveground part of the plant); and/or earlier flowering; and/or earlier fruiting; and/or earlier grain maturity; and/or less non-productive tillers; and/or less dead basal leaves; and/or less input needed (such as fertilizers or water); and /or higher nutrition use efficiency (higher yield with same fertilizer) and/or greener leaves; and/or complete maturation under shortened vegetation periods; and/or easier harvesting; and/or faster and more uniform ripening; and/or ability to withstand advanced seeding, leading to enhanced harvest security; and/or longer shelf-life; and/or longer panicles; and/or delay of senescence ; and/or stronger and/or more productive tillers; and/or better extractability of ingredients; and/or improved quality of seeds (for being seeded in the following seasons for seed production); and/or reduced production of ethylene and/or the inhibition of its reception by the plant, and/or improved emergence; and/or enhanced root growth and/or more developed root system; and/or enhanced nodulation, in particular rhizobial nodulation;-and/or increased plant height; and/or less seeds needed and/or stronger and/or more productive tillers and/or improved quality of seeds (for being seeded in the following seasons for seed production);-and/or field establishment.

The term "advanced seeding" or "earlier seeding" is defined as seeding of a crop variety before seeding of such crop variety is generally carried out in the respective area.

Consequently, the term "advanced" and "earlier" is a relative term and depends on multiple parameters; especially on climatic conditions present in the respective area.

Another indicator for the condition of the plant is the plant's tolerance or resistance to biotic and/or abiotic stress factors. Biotic and abiotic stress, especially over longer terms, can have harmful effects on plants.

Biotic stress is caused by living organisms while abiotic stress is caused for example by environmental extremes. According to the present invention, "enhanced tolerance or resistance to biotic and/or abiotic stress factors" means (1.) that certain negative factors caused by biotic and/or abiotic stress are diminished in a measurable or noticeable amount as compared to plants exposed to the same conditions, but without being treated with an inventive mixture and (2.) that the negative effects are not diminished by a direct action of the inventive mixture on the stress factors, e.g. by its fungicidal or insecticidal action which directly destroys the microorganisms or pests, but rather by a stimulation of the plants' own defensive reactions against said stress factors.

Negative factors caused by biotic stress such as pathogens and pests are widely known and are caused by living organisms, such as competing plants (for example weeds), microorganisms (such as phythopathogenic fungi and/or bacteria) and/or viruses.

Negative factors caused by abiotic stress are also well-known and can often be observed as reduced plant vigor (see above).
Abiotic stress can be caused for example by: extremes in temperature such as heat or cold (heat stress / cold stress); and/or strong variations in temperature; and/or temperatures unusual for the specific season; and/or drought (drought stress); and/or extreme wetness; and/or high salinity (salt stress); and/or radiation (for example by increased UV radiation due to the decreasing ozone layer); and/or increased ozone levels (ozone stress); and/or organic pollution (for example by phythotoxic amounts of pesticides); and/or inorganic pollution (for example by heavy metal contaminants).

As a result of biotic and/or abiotic stress factors, the quantity and the quality of the stressed plants decrease. As far as quality (as defined above) is concerned, reproductive development is usually severely affected with consequences on the crops which are important for fruits or seeds. Synthesis, accumulation and storage of cellular components (e.g. carbohydrate, proteins) are mostly affected by temperature; growth is slowed by almost all types of stress; polysaccharide synthesis, both structural and storage is reduced or modified: these effects result in a decrease in biomass (yield) and in changes in the nutritional value of the product.

As pointed out above, the above identified indicators for the health condition of a plant may be interdependent and may result from each other. For example, an increased resistance to biotic and/or abiotic stress may lead to a better plant vigor, e.g. to better and bigger crops, and thus to an increased yield. Inversely, a more developed root system may result in an increased resistance to biotic and/or abiotic stress. However, these interdependencies and interactions are neither all known nor fully understood and therefore the different indicators are described separately.

In a preferred embodiment of the present invention, the use of the mixtures of the present invention refers to a use for increasing the yield and resistance against biotic stress.

Thus, the present invention relates to methods for increasing the yield of the plant, wherein the plant, the locus where the plant is growing or is expected to grow or plant propagation material from which the plant grows is treated with an effective amount of an inventive mixture.

The present invention also relates to a method for increasing the plants resistance against abiotic stress, wherein the plant, the locus where the plant is growing or is expected to grow or plant propagation material from which the plant grows is treated with an effective amount of an inventive mixture.

In a preferred embodiment, the present invention relates to methods for increasing the yield of the plant, wherein the plant, the locus where the plant is growing or is expected to grow is treated with an effective amount of an inventive mixture.

In a further preferred embodiment present invention also relates to a method for increasing the plants resistance against abiotic stress, wherein the plant, the locus where the plant is growing or is expected to grow is treated with an effective amount of an inventive mixture.

In another preferred embodiment the present invention also relates to a method for increasing the plants vigor, wherein the plant, the locus where the plant is growing or is expected to grow is treated with an effective amount of an inventive mixture. In particular, the present invention also relates to a method for increasing the plants ability to withstand advanced seeding wherein the plant, the locus where the plant is growing or is expected to grow is treated with an effective amount of an inventive mixture.

In particular, the present invention also relates to a method for increasing the plants ability for faster and more uniform ripening, wherein the plant, the locus where the plant is growing or is expected to grow is treated with an effective amount of an inventive mixture.

Herein, as stated above, the plants are preferably selected from sugar beet, corn, soybean, summer oilseed rape, cotton and sunflower and winter crops, such as winter oil seed rape winter cereals such as rye (winter rye/fall rye), wheat (winter wheat/fall wheat), barley (winter barley/fall barley) and triticale (winter triticale), oat (winter oat), wherein winter oilseed rape is the most preferred crop.

Preferably, the increased yield is characterized by
- an increased absolute yield
- improved ratio of the seed biomass ratio ("yield efficiency"); and/or
- 1000 kernel weight ("size" of the grain)
- germination rate
- increased content of valuable inerts, such as oil content, sugar content, etc...

In particular for oilseed rape (winter and summer) and soybean, increased yield may be further preferably characterized by
- more pods per plant.
- More seeds per pod
- Bigger seeds
- Higher oil content
- Better oil fatty acid combination (ölsäuremuster)

In particular for oilseed rape (winter and summer), corn and soybean, increased yield may be further preferably characterized by
- more kernels per row/pod.

In particular for sunflower, increased yield may be further preferably characterized by
- enlarged flowering head
- improved filling of flowering head

Preferably, the resistance against abiotic stress refers to the ability of the plants, in particular to the plants selected from
Sugar beet, corn, soybean, winter oil seed rape, summer oilseed rape, cotton and sunflower and winter cereals such as rye (winter rye/fall rye), wheat (winter wheat/fall wheat), barley (winter barley/fall barley) and triticale (winter triticale), oat (winter oat), wherein winter oilseed rape is the most preferred crop,
to survive better if exposed to extremes in temperature such as heat or cold (heat stress / cold stress); and/or strong variations in temperature; and/or temperatures unusual for the specific season; and/or drought (drought stress); and/or extreme wetness; and/or high salinity (salt stress); and/or radiation (for example by increased UV radiation due to the decreasing ozone layer); and/or increased ozone levels (ozone stress); and/or organic pollution (for example by phythotoxic amounts of pesticides); and/or inorganic pollution (for example by heavy metal contaminants).

In particular, for winter crops - in particular winter oil seed rape - the resistance against abiotic stress refers to the ability of the plants to survive adverse growing conditions in the winter ("improved winter hardiness"). Winter hardiness is the reduction of plant height and biomass development in course of the product application in autumn. Leading to a clinched and compact plant, with a short hypocotyl and the location of the vegetative point in the soil or very near to the soil. This leads to a lower vulnerability to frost and in following an increase of plant survival if severe frost occurs.

In particular, the improved winter hardiness is characterized by
- reduced plant height prior winter
- number of plants surviving winter season / plot
- more developed root system (increased root mass)
- improved shortening of the aboveground part of the plant

Thus, in a further more preferred embodiment present invention also relates to a method for increasing the winter hardiness of winter crops, wherein the plant, the locus where the plant is growing or is expected to grow is treated with an effective amount of an inventive mixture.

In particular, for winter crops - in particular winter oil seed rape - the increased plant vigor is to be understood as an increased harvest security, i.e. an improved predictability and reliability of the final yield by controlling precisely the overall plant development throughout its vegetation cycle leading to plants that are optimal prepared to cope with adverse external factors such as weather (e.g. frost, drought), weeds, grasses, diseases (e.g. phytopathogenic fungi, insects, slugs) and reduced tillage, reducing the risk of a poor harvest or even crop loss. Another aspect of increased harvest security is directed to the possibility of increasing the influence on the harvest time point as well as its predictability and reliability which can be obtained by precisely controlling the plant development resulting in a reduced work load and more effective assignment (flexibility) of resources for the farmer. In yet another aspect, harvest security may result in increased quality of the harvested product such as a reduction of the level of impurities.

Thus, in a further more preferred embodiment present invention also relates to a method for increasing the harvest security of winter crops, wherein the plant, the locus where the plant is growing or is expected to grow is treated with an effective amount of an inventive mixture.

In a most preferred embodiment present invention also relates to a method for increasing the winter hardiness of winter crops, wherein the plant, the locus where the plant is growing or is expected to grow is treated with an effective amount of an inventive mixture.

According to the present invention, the yield is increased by at least 4%. In general, the yield increase may even be higher, for example 5 to 10 %, more preferable by 10 to 20 %, or even 20 to 30 % or more.

According to the present invention, the yield - if measured in the absence of pest pressure - is increased by at least 2 % In general, the yield increase may even be higher, for example until 4%-5% or even more.

The invention also relates to agrochemical compositions comprising an auxiliary and one or more of the compounds of the inventive mixtures.
The the compounds of the inventive mixtures can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emul¬sions (e.g. EW, EO, ES, ME), capsules (e.g. CS, ZC), pastes, pastilles, wettable pow¬ders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclo¬hexanol; glycols; DMSO; ketones, e.g. cyclo-hexanone; esters, e.g. lactates, carbonates, fatty acid esters, gamma-butyrolactone; fatty acids; phosphonates; amines; amides, e.g. N-methylpyrrolidone, fatty acid di-methylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulf-onates of dodecyl- and tridecylbenzenes, sulfonates of naphthalenes and alkyl¬naphtha-lenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the performance of the compounds of the inventive mixtures. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellu-lose), anorganic clays (organically modified or unmodified), polycarboxylates, and silicates. Suitable bactericides are bronopol and isothiazolinone derivatives such as alkyliso-thiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for composition types and their preparation are set forth below. The term "active substance" describes at least one of the compounds of the inventive mixtures. As explained below, the compounds can be formulated together (co-formulation) or separately (tank-mix) in various combinations.

### i) Water-soluble concentrates (SL, LS)

10-60 wt% active substances and 5-15 wt% wetting agent (e.g. alcohol alkoxylates) are dissolved in water and/or in a water-soluble solvent (e.g. alcohols) ad 100 wt%. The active substance dissolves upon dilution with water.

### ii) Dispersible concentrates (DC)

5-25 wt% active substances and 1-10 wt% dispersant (e. g. polyvinylpyrrolidone) are dissolved in organic solvent (e.g. cyclohexanone) ad 100 wt%. Dilution with water gives a dispersion.

### iii) Emulsifiable concentrates (EC)

15-70 wt% active substances and 5-10 wt% emulsifiers (e.g. calcium dodecylben-zenesulfonate and castor oil ethoxylate) are dissolved in water-insoluble organic solvent (e.g. aromatic hydrocarbon) ad 100 wt%. Dilution with water gives an emulsion.

### iv) Emulsions (EW, EO, ES)

5-40 wt% active substances and 1-10 wt% emulsifiers (e.g. calcium dodecylben-zenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emul-sion. Dilution with water gives an emulsion.

### v) Suspensions (SC, OD, FS)

In an agitated ball mill, 20-60 wt% active substances are comminuted with addition of 2-10 wt% dispersants and wetting agents (e.g. sodium lignosulfonate and alcohol ethoxylate), 0.1-2 wt% thickener (e.g. xanthan gum) and ad water ad 100 wt% to give a fine active substance suspension. Dilution with water gives a stable suspension of the active substance. For FS type composition up to 40 wt% binder (e.g. polyvinylalcohol) is added.

### vi) Water-dispersible granules and water-soluble granules (WG, SG)

50-80 wt% active substances are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

### vii) Water-dispersible powders and water-soluble powders (WP, SP, WS)

50-80 wt% active substances are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.

### viii) Gel (GW, GF)

In an agitated ball mill, 5-25 wt% active substances are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.

### iv) Microemulsion (ME)

5-20 wt% active substances are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 wt%. This mixture is stirred for 1 h to produce spontaneously a thermodynamically stable microemulsion.

### iv) Microcapsules (CS)

An oil phase comprising 5-50 wt% active substances, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solu¬tion of a protective colloid (e.g. polyvinyl alcohol). Radical polymerization initiated by a radical initiator results in the formation of poly(meth)acrylate microcapsules. Alternatively, an oil phase comprising 5-50 wt% of the active substances, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The mono-mers amount to 1-10 wt%. The wt% relate to the total CS composition.

### ix) Dustable powders (DP, DS)

1-10 wt% active substances are ground finely and mixed intimately with solid carrier (e.g. finely divided kaolin) ad 100 wt%.

### x) Granules (GR, FG)

0.5-30 wt% active substances are ground finely and associated with solid carrier (e.g. silicate) ad 100 wt%. Granulation is achieved by extrusion, spray-drying or fluidized bed.

### xi) Ultra-low volume liquids (UL)

1-50 wt% active substances are dissolved in organic solvent (e.g. aromatic hydro-carbon) ad 100 wt%.
The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and in particular between 0.5 and 75%, by weight of active substances. The active substances are employed in a purity of from 90% to 100%, preferably from 95% to 100% (according to NMR spectrum).
Solutions for seed treatmenr (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying or treating with the compounds of the inventive mixtures and compositions thereof, respectively, on to plant propagation material, especially seeds include dressing, coating, pelleting, dusting, soaking and in-furrow application methods of the propagation material. Preferably, the compounds of the inventive mixtures or the composi-tions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.
When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.
Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

As referred to above, the inventive mixtures are used for the protetion of plant propagation material, preferably the seeds summarized as "seed treatment"

Seed treatment can be made into the seedbox before planting into the field.

For seed treatment purposes, the weight ration in the inventive mixtures generally depends from the properties of the compounds of the inventive mixtures.

Compositions, which are especially useful for seed treatment are those listed above, e.g.:
- A: Soluble concentrates (SL, LS)
- D: Emulsions (EW, EO, ES)
- E: Suspensions (SC, OD, FS)
- F: Water-dispersible granules and water-soluble granules (WG, SG)
- G: Water-dispersible powders and water-soluble powders (WP, SP, WS)
- H: Gel-Formulations (GF)
- I: Dustable powders (DP, DS)

These compositions can be applied to plant propagation materials, particularly seeds, diluted or undiluted. These compositions can be applied to plant propagation materials, particularly seeds, diluted or undiluted. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e. g. by seed dressing, pelleting, coating and dusting.

In the treatment of plant propagation material (preferably seed), the application rates of the inventive mixture are generally for the formulated product (which usually comprises from10 to 750 g/l of the active(s)).

The invention also relates to the propagation products of plants, and especially the seed comprising, that is, coated with and/or containing, a mixture as defined above or a composition containing the mixture of two or more active ingredients or a mixture of two or more compositions each providing one of the active ingredients. The plant propagation material (preferably seed) comprises the inventive mixtures in an amount of from 0.1 g to 10 kg per 100 kg of plant propagation material (preferably seed), preferably 0.1 g to 1 kg per 100 kg of plant propagation material (preferably seed).

For example, the ratio by weight for compound II is herein preferably between 0.5 - 200 g/100kg plant propagation material (preferably seed), more preferred 1 to 50 g/100kg plant propagation material (preferably seed) and most preferred 1 to 20 g/100kg plant propagation material (preferably seed).

For example, the ratio by weight of compound I is herein preferably between 1 - 2000 g/100kg plant propagation material (preferably seed), more prefered 10 to 1000 g/100kg plant propagation material (preferably seed), most preferred 25 to 750 g/100kg plant propagation material (preferably seed) and utmost preferred 50-500 g/100kg plant propagation material (preferably seed).

According to one embodiment, individual components of the composition according to the invention such as parts of a kit or parts of a binary or ternary mixture may be mixed by the user himself in a spray tank and further auxiliaries may be added, if appropriate.

The inventive mixtures can be also used for controlling pests carried out in a manner known per se to those skilled in the art, depending on the intended aims and prevailing circumstances.

Herein, the inventive mixtures are suitable for controlling the following fungal plant diseases:
*Albugo* spp. (white rust) on ornamentals, vegetables (e. g. *A*. *candida*) and sunflowers (e. g. *A*. *tragopogonis*); *Alternaria* spp. (Alternaria leaf spot) on vegetables, rape (A. *brassicola* or *brassicae*), sugar beets (*A*. *tenuis*), fruits, rice, soybeans, potatoes (e. g. *A. solani* or *A*. *alternata*), tomatoes (e. g. *A*. *solani* or *A*. *alternata*) and wheat; *Aphanomyces* spp. on sugar beets and vegetables; *Ascochyta* spp. on cereals and vegetables, e. g. *A*. *tritici* (anthracnose) on wheat and *A*. *hordei* on barley; *Bipolaris* and *Drechslera* spp. (teleomorph: *Cochliobolus* spp.), e. g. Southern leaf blight (*D. maydis)* or Northern leaf blight (*B. zeicola*) on corn, e. g. spot blotch (*B. sorokiniana*) on cereals and e.g. *B*. *oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana*: grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn (e.g. Gray leaf spot: *C. zeae-maydis*), rice, sugar beets (e. g. *C. beticola*), sugar cane, vegetables, coffee, soybeans (e. g. *C. sojina* or *C*. *kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C*. *carbonum*), cereals (e. g. *C. sativus*, anamorph: *B. sorokiniana*) and rice (e. g. *C*. *miyabeanus*, anamorph: *H. oryzae*); *Colletotrichum* (teleomorph: *Glomerella*) spp. (anthracnose) on cotton (e. g. *C. gossypii*), corn (e. g. *C. graminicola*: Anthracnose stalk rot), soft fruits, potatoes (e. g. *C. coccodes*: black dot), beans (e. g. *C. lindemuthianum*) and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri*, teleomorph: *Neonectria liriodendri*: Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium*, teleomorph: *Pyrenophora*) spp. on corn, cereals, such as barley (e. g. *D. teres*, net blotch) and wheat (e. g. *D. tritici-repentis*: tan spot), rice and turf; Esca (dieback, apoplexy) on vines, caused by *Formitiporia* (syn. *Phellinus*) *punctata*, *F. mediterranea, Phaeomoniella chlamydospora* (earlier *Phaeoacremonium chlamydosporum*), *Phaeoacremonium aleophilum* and/or *Botryosphaeria obtusa*; *Elsinoe* spp. on pome fruits (*E. pyri*), soft fruits (*E*. *veneta*: anthracnose) and vines (*E. ampelina*: anthracnose); *Entyloma oryzae* (leaf smut) on rice; *Epicoccum* spp. (black mold) on wheat; *Erysiphe* spp. (powdery mildew) on sugar beets (*E. betae*), vegetables (e. g. *E. pisi*), such as cucurbits (e. g. *E. cichoracearum*), cabbages, rape (e. g. *E. cruciferarum*); *Eutypa lata* (Eutypa canker or dieback, anamorph: *Cytosporina lata*, syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi*: Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera*, teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. laxa*, *M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici*, Septoria blotch) on wheat or *M*. *fijiensis* (black Sigatoka disease) on bananas; *Peronospora* spp. (downy mildew) on cabbage (e. g. *P. brassicae*), rape (e. g. *P. parasitica*), onions (e. g. *P. destructor*), tobacco (*P*. *tabacina*) and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata*: stem rot); *Phoma lingam* (root and stem rot) on rape and cabbage and *P. betae* (root rot, leaf spot and damping-off) on sugar beets; *Phomopsis* spp. on sunflowers, vines (e. g. *P*. *viticola*: can and leaf spot) and soybeans (e. g. stem rot: *P. phaseoli*, teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma*, syn. *P. sojae*), potatoes and tomatoes (e. g. *P. infestans*: late blight) and broad-leaved trees (e. g. *P. ramorum*: sudden oak death); *Plasmodiophora brassicae* (club root) on cabbage, rape, radish and other plants; *Plasmopara* spp., e. g. *P. viticola* (grapevine downy mildew) on vines and *P*. *halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P*. *graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P*. *humili* on hop; *Pseudopezicula tracheiphila* (red fire disease or ,rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera*) *tritici-repentis* (tan spot) on wheat or *P*. *teres* (net blotch) on barley; *Pyricularia* spp., e. g. *P. oryzae* (teleomorph: *Magnaporthe grisea*, rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P*. *aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R*. *cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S*. *attenuatum* (sheath rot) on rice; *Sclerotinia* spp. (stem rot or white mold) on vegetables and field crops, such as rape, sunflowers (e. g. *S*. *sclerotiorum*) and soybeans (e. g. *S*. *rolfsii* or *S*. *sclerotiorum*); *Septoria* spp. on various plants, e. g. *S*. *glycines* (brown spot) on soybeans, *S*. *tritici* (Septoria blotch) on wheat and S. (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S*. *turcicum*, syn. *Helminthosporium turcicum*) and turf; *Sphacelotheca* spp. (smut) on corn, (e. g. *S*. *reiliana*: head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S*. *nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries*, wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus*, syn. *U. phaseoli*) and sugar beets (e. g. *U. betae*); *Ustilago* spp. (loose smut) on cereals (e. g. *U. nuda* and *U. avaenae*), corn (e. g. *U. maydis*: corn smut) and sugar cane; *Venturia* spp. (scab) on apples (e. g. *V*. *inaequalis*) and pears; and *Verticillium* spp. (wilt) on various plants, such as fruits and ornamentals, vines, soft fruits, vegetables and field crops, e. g. *V*. *dahliae* on strawberries, rape, potatoes and tomatoes.

The mixtures according to the present invention and compositions thereof, respectively, are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans*, *Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., *Paecilomyces* spp. and Zygomycetes such as *Mucor* spp., and in addition in the protection of stored products and harvest the following yeast fungi are worthy of note: *Candida* spp. and *Saccharomyces cerevisae.*

The invention shall be illustrated by the following examples. The active compounds were tested in a greenhouse trial and were used in the formulated form (200 g/l Pyraclostrobin EC formulation, Mepiquat-Cl 300 g/l + Prohexadione-Ca 50 g/L SC formulation, Pyraclostrobin 100g/L + Mepiquat-Cl 150g/L + Prohexadione-Ca 25 g/L (combination product)).
The expected efficacies of active compound mixtures were determined using Colby's formula [R.S. Colby, "Calculating synergistic and antagonistic responses of herbicide combinations", Weeds 15, 20-22 (1967)] and compared with the observed efficacies.
Activity on plant height reduction was measured and results are presented below.
The tested products were applied on the plants at BBCH growth stage 13-14. The assessments were taken 21 and 28 days after application.
The measured parameters were compared to the growth of the untreated control pots to determine the relative growth inhibition in %. The results are shown in table 1 for the assessment 21 days after application and in table 2 for 28 days after application.
The compounds were used in formulated form.

**Table 1 (activity 21 days after application)**

| Active compound / active mixture | Amount ai g/ha | Observed efficacy, (% shorten-ing) | Calculated efficacy according to Colby (%) | Synergism (%) |
|---|---|---|---|---|
| Pyraclostrobin | 200 | 6,45 | - | - |
| Prohexadione-Ca + Mepiquat chloride-CI | 50 + 300 | 3,23 | - | - |
| Pyraclostrobin, Prohexadione-Ca + Mepiquat chloride-CI | 200 | 12,9 | 9,47 | 36,3 |
| | 50 | | | |
| | 300 | | | |

## Claims

1. Mixtures comprising, as active ingredients,
1) a compound (I), being pyraclostrobin; and
2) a compound (II), selected from prohexadione and salts and esters thereof; and
3) a compound (III), selected from mepiquate and salts thereof;
in synergistically effective amounts.

2. The mixture according to claim 1, wherein compound (II) is prohexadione-Ca.

3. The mixture according to claim 1 or 2, wherein compound (III) is mepiquat-chloride

4. The mixture of any of claims 1 to 3, wherein in which each combination of two ingredients in the mixture of three ingredients ranges from 500:1 to 1:500

5. A pesticidal composition, comprising a liquid or solid carrier and a mixture as defined in any of claims 1 to 4.

6. A method for improving the health of plants, wherein the plant, the locus where the plant is growing or is expected to grow or plant propagation material from which the plant grows is treated with an effective amount of a mixture as defined in any of claims 1 to 4.

7. A method for increasing the yield of the plant, wherein the plant, the locus where the plant is growing or is expected to grow or plant propagation material from which the plant grows is treated with an effective amount of a mixture as defined in any of claims 1 to 4.

8. A method for enhancing the quality of the yield of the plant, wherein the plant, the locus where the plant is growing or is expected to grow or plant propagation material from which the plant grows is treated with an effective amount of a mixture as defined in any of claims 1 to 4.

9. A method for increasing winter-hardiness of a winter crop, wherein the plant, the locus where the plant is growing or is expected to grow or plant propagation material from which the plant grows is treated with an effective amount of a mixture as defined in any of claims 1 to 4, wherein the plant is selected from winter cereals.

10. A method as claimed in claims 6 to 9, wherein compound I, compound II and compound III as defined in any of claims 1 to 4 are applied simultaneously, that is jointly or separately, or in succession.

## Patentansprüche

1. Mischungen umfassend als Wirkstoffe
1) eine Verbindung (I), bei der es sich um Pyraclostrobin handelt; und
2) eine Verbindung (II), ausgewählt aus Prohexadion und Salzen und Estern davon; und
3) eine Verbindung (III), ausgewählt aus Mepiquat und Salzen davon,
in synergistisch wirksamen Mengen.

2. Mischung nach Anspruch 1, wobei es sich bei der Verbindung (II) um Ca-Prohexadion handelt.

3. Mischung nach Anspruch 1 oder 2, wobei es sich bei der Verbindung (III) um Mepiquat-Chlorid handelt.

4. Mischung nach einem der Ansprüche 1 bis 3, wobei jede Kombination von zwei Bestandteilen in der Mischung von drei Bestandteilen im Bereich von 500:1 bis 1:500 liegt.

5. Pestizide Zusammensetzung, umfassend einen flüssigen oder festen Träger und eine Mischung wie in einem der Ansprüche 1 bis 4 definiert.

6. Verfahren zum Verbessern der Gesundheit von Pflanzen, wobei die Pflanze, der Standort, wo die Pflanze wächst oder wachsen soll, oder pflanzliches Vermehrungsgut, aus dem die Pflanze heranwächst, mit einer wirksamen Menge einer Mischung wie in einem der Ansprüche 1 bis 4 definiert behandelt wird.

7. Verfahren zum Erhöhen des Ertrags der Pflanze, wobei die Pflanze, der Standort, wo die Pflanze wächst oder wachsen soll, oder pflanzliches Vermehrungsgut, aus dem die Pflanze heranwächst, mit einer wirksamen Menge einer Mischung wie in einem der Ansprüche 1 bis 4 definiert behandelt wird.

8. Verfahren zum Verbessern der Qualität des Ertrags der Pflanze, wobei die Pflanze, der Standort, wo die Pflanze wächst oder wachsen soll, oder pflanzliches Vermehrungsgut, aus dem die Pflanze heranwächst, mit einer wirksamen Menge einer Mischung wie in einem der Ansprüche 1 bis 4 definiert behandelt wird.

9. Verfahren zum Verstärken der Winterhärte einer Winterkultur, wobei die Pflanze, der Standort, wo die Pflanze wächst oder wachsen soll, oder pflanzliches Vermehrungsgut, aus dem die Pflanze heranwächst, mit einer wirksamen Menge einer Mischung wie in einem der Ansprüche 1 bis 4 definiert behandelt wird, wobei die Pflanze aus Wintergetreide ausgewählt ist.

10. Verfahren nach den Ansprüchen 6 bis 9, wobei die Verbindung I, die Verbindung II und die Verbindung III wie in einem der Ansprüche 1 bis 4 definiert gleichzeitig, d. h. gemeinsam oder separat, oder in Abfolge appliziert werden.

## Revendications

1. Mélanges comprenant, comme ingrédients actifs,
1) un composé (I), qui est la pyraclostrobine ; et
2) un composé (II), sélectionné parmi la prohexadione et les sels et esters de celle-ci ; et
3) un composé (III), sélectionné parmi le mépiquat et les sels de celui-ci ;
selon des quantités efficaces sur le plan synergique.

2. Mélange selon la revendication 1, dans lequel le composé (II) est la prohexadione-Ca.

3. Mélange selon la revendication 1 ou 2, dans lequel le composé (III) est le chlorure de mépiquat.

4. Mélange selon l'une quelconque des revendications 1 à 3, dans lequel chaque combinaison de deux ingrédients dans le mélange de trois ingrédients va de 500:1 à 1:500.

5. Composition pesticide, comprenant un véhicule liquide ou solide et un mélange tel que défini selon l'une quelconque des revendications 1 à 4.

6. Méthode destinée à améliorer la santé de plantes, dans laquelle la plante, le lieu où la plante se développe ou est censée se développer ou un matériau de propagation végétal à partir duquel la plante se développe est traité(e) par une quantité efficace d'un mélange tel que défini selon l'une quelconque des revendications 1 à 4.

7. Méthode destinée à augmenter le rendement d'une plante, dans laquelle la plante, le lieu où la plante se développe ou est censée se développer ou un matériau de propagation végétal à partir duquel la plante se développe est traité(e) par une quantité efficace d'un mélange tel que défini selon l'une quelconque des revendications 1 à 4.

8. Méthode destinée à augmenter la qualité du rendement d'une plante, dans laquelle la plante, le lieu où la plante se développe ou est censée se développer ou un matériau de propagation végétal à partir duquel la plante se développe est traité(e) par une quantité efficace d'un mélange tel que défini selon l'une quelconque des revendications 1 à 4.

9. Méthode destinée à augmenter la rusticité hivernale d'une culture d'hiver, dans laquelle la plante, le lieu où la plante se développe ou est censée se développer ou un matériau de propagation végétal à partir duquel la plante se développe est traité(e) par une quantité efficace d'un mélange tel que défini selon l'une quelconque des revendications 1 à 4, où la plante est sélectionnée parmi les céréales d'hiver.

10. Méthode selon les revendications 6 à 9, dans laquelle le composé I, le composé II et le composé III tels que définis selon l'une quelconque des revendications 1 à 4 sont appliqués simultanément, c'est-à-dire conjointement ou séparément, ou en succession.
